# EUROPÄISCHE PATENTSCHRIFT

(11) **EP 0 535 510 B1**
(45) Veröffentlichungstag und Bekanntmachung des Hinweises auf die Patenterteilung: **10.04.1996**
(21) Anmeldenummer: 92116211.1
(22) Anmeldetag: 23.09.1992
(51) Int. Cl.: H01L 41/09, H01L 41/113, H01H 57/00, G09B 21/00

(54) **Elektromechanischer Wandler**
Electromechanical transducer
Transducteur électromécanique

(30) Priorität: 04.10.1991 DE 4133000
(43) Veröffentlichungstag der Anmeldung: 07.04.1993
(73) Patentinhaber: Kipke, Siegfried, Dipl.-Ing., D-72160 Horb (DE)
(72) Erfinder: Kipke, Siegfried, Dipl.-Ing., D-72160 Horb (DE)

(56) Entgegenhaltungen:
- EP-A- 0 170 958
- EP-A- 0 400 163
- DE-A- 3 713 697
- DE-A- 3 728 817
- GB-A- 2 087 659
- US-A- 4 283 178

## Beschreibung

Die Erfindung betrifft einen elektromechanischen Wandler gemäß Oberbegriff des Anspruchs 1.

Es sind elektromechanische Wandler bekannt,die mittels piezoelektrischer Wandlerelemente ein elektrisches Signal in eine mechanische Reaktion umsetzen. Der Anwendungsbereich derartiger Wandlerelemente ist sehr vielseitig, so daß damit beispielsweise elektrische Relais für besondere Anwendungsfälle realisiert werden können. Auch der Einsatz als Braillemodul zur Darstellung von Blindenschrift -der sogenannten Brailleschrift- ist bekannt.

Aus der EP 0 067 883 Al ist ein piezoelektrisches Relais bekannt, bei dem an dem Wandlerelement elektrische Kontakte angebracht sind, die durch Anlegen einer elektrischen Spannung am Wandlerelement dadurch bewegt werden, daß sich das Wandlerelement aufgrund der angelegten elektrischen Spannung biegt. Ein piezoelektrisches Relais, bei dem die Längenausdehnung des Wandlerelements zur Betätigung elektrischer Kontakte verwendet wird, ist aus der EP 0 170 958 Al bekannt.

Aus DE 3 713 697 ist ein ultraschnelles Steuerventil bekannt das mittels einer hydraulischen Übersetzung den geringen Hub eines piezoelektrischen Wandlerelementes in einen großen Hub eines Betätigungselementes in Form eines Ventilstössels umwandelt. Hierbei wird mit Hilfe eines Ausgleichskanals Änderungen infolge von Temperaturschwankungen ausgeglichen.

Ebenfalls ist aus US-PS 4,283,178 ein piezoelektrisches Braillemodul zur Darstellung von Brailleschrift bekannt, bei dem an den freien Enden der streifenförmigen piezoelektrischen Wandlerelemente taktile Stifte -sogenannte Taststifte- aufstehen.

Der Erfindung liegt die Aufgabe zugrunde, einen elektromechanischen Wandler mit einem piezoelektrischen Wandlerelement zu schaffen, mit dem eine Umwandlung eines elektrischen Signals in eine Kraft und auch umgekehrt eine Kraft in ein elektrisches Signal umgewandelt werden kann. Hierbei ist es die Zielsetzung eine einfache Montage des piezoelektrischen Wandlers zu ermöglichen.

Die Lösung dieser Aufgabe erhält man durch die im Anspruch 1 angegebenen Merkmale. Das piezoelektrische Wandlerelement befindet sich in einem mit Flüssigkeit gefülltem Druckraum, dessen Flüssigkeit wenigstens durch eine Öffnung verdrängt werden kann. Die Verdrängung der Flüssigkeit kann im Bereich der Öffnung in eine Bewegung oder Verformung eines Betätigungselements umgewandelt werden, um eine dem angelegten elektrischen Signal entsprechende mechanische Reaktion zu erzeugen. Erfindungsgemäß wird durch eine elastische Kontaktierung der einzelnen piezoelektrischen Plättchen-wie mittels Kontaktfedern- eine leitende Verbindung des Wandlerelementes, auch im verformten, aktiven Zustand, sichergestellt.

Die bevorzugte Ausführungsform sieht vor, daß der Druckraum im wenigstens einen sich an die Öffnung anschließenden Druckkanal übergeht, der einen wesentlich kleineren Querschnitt hat als der Druckraum, und daß in den Druckkanal von außen ein dieselbe Querschnittsform wie der Druckkanal aufweisender Stempel ragt, der an einem Betätigungselement absteht. Das Betätigungselement kann unter anderem zur direkten Darstellung einer taktil erfaßbaren Information dienen oder zur Betätigung elektrischer Kontakte eines Relais verwendet werden. Wird andererseits das Betätigungselement beispielsweise durch Berühren mit dem Finger niedergedrückt und dadurch der Stempel in den Druckanal bewegt, erzeugt dies eine entsprechende Druckerhöhung im Druckraum. Diese Druckerhöhung bewirkt eine Formänderung am piezoelektrischen Wandlerelement, welches dadurch bekanntlich seine elektrischen Eigenschaften ändert. So kann dadurch am piezoelektrischen Wandlerelement eine Spannungsänderung in Abhängigkeit von der jeweiligen Druckänderung festgestellt werden. Der elektromechanische Wandler kann somit auch zur Eingabe von Informationen durch Betätigung der Betätigungselemente verwendet werden. Als Betätigungselement kann eine die Öffnung des Druckkanal abdeckende elastisch verformbaren Wandung dienen.

Bei Anlegen einer Spannung am piezoelektrischen Wandlerelement bewirkt diese je nach Potentialvorzeichen eine Ausbuchtung oder Einbuchtung der elastischen Wandung. Diese Verformungen der Wandung lassen sich ebenfalls von Hand ertasten, so daß dadurch auch Informationen taktil erfaßbar werden. Die Verformung der Wandung kann aber auch zur Betätigung eines elektrischen Kontaktes dienen.

Das Betätigungselement kann zur Betätigung unterschiedlicher Funktionen eingesetzt werden, so daß damit auch ein Kolben einer Pumpe betätigt werden kann. Das Betätigungselement kann auch selbst einen Ventilkörper darstellen, wodurch sich weitere Anwendungsmöglichkeiten ergeben.

Das piezoelektrische Wandlerelement besteht vorzugsweise aus einem oder mehreren piezokeramischen Plättchen, die jeweils auf metallischen Kontaktplättchen aufgebracht sind, wobei eine Membran zwischen Wandlerelement und der im Druckraum befindlichen Flüssigkeit vorgesehen ist. Wird eine elektrische Spannung an das piezokeramische Plättchen eingelegt, so bewirkt die abhängig von der Polarisierungsrichtung des piezokeramischen Plättchens resultierende Flächenausdehnung bzw. -zusammenziehung des piezokeramischen Materials, eine Wölbung, da das mit dem piezokeramischen Plättchen verbundene metallische Kontaktplättchen sich nicht ausdehnt. Die Verformung des piezokeramischen Plättchens wird zur Verdrängung der Flüssigkeit im Druckraum und damit zur Betätigung der jeweiligen Betätigungselemente verwendet. Hierbei ist durch eine federnde Kontaktierung des piezokeramischen Plättchens eine leitende Verbindung auch im verformten Zustand sichergestellt.

Werden mehrere piezokeramische Wandler übereinander in Form eines Wandlerpakets angeordnet, so läßt sich dadurch eine entsprechend größere Volumenänderung bei Anlegen einer Spannung erzeugen. Dadurch können größere Hubbewegungen im Bereich der Betätigungselemente ausgeführt werden und es läßt sich auch ein günstigeres Querschnittsverhältnis zwischen Druckkanal und Druckraum realisieren, als bei einer Ausführungsform mit nur einem einzigen piezoelektrischen Wandlerelement. Die Querschnittsfläche der Öffnung und des sich gegebenenfalls daran anschließenden Druckkanals ist um ein mehrfaches kleiner als die Oberfläche des piezoelektrischen Wandlerelements bzw. als die Querschnittsfläche des Druckraums. Dadurch wird erreicht, daß bereits eine geringe Volumenänderung im Bereich des Druckraums eine verhältnismäßig große Änderung des Flüssigkeitsstandes im Bereich des Druckkanals bewirkt.

Es sei noch erwähnt, daß anstelle einer Flüssigkeit im Druckraum auch ein Gas als Druckmedium verwendet werden kann, um aufgrund dessen Kompressibilität ein federndes Verhalten zu erzielen.

Die Erfindung wird nachfolgend anhand von in der Zeichnung dargestellten Ausführungsbeispielen näher erläutert.

Es zeigen:
Figur 1 ein vergrößert dargestelltes Braillemodul im Schnitt mit einem tastbaren Betätigungselement (1-Punkt-Modul), wobei das Betätigungselement in Form eines tastbaren Stiftes des sogenanten Taststiftes-ausgebildet ist der sich in der abgesenkten Stellung befindet,
Figur 2 das Modul von Figur 1 bei angehobenem Betätigungselement,
Figur 3 die Draufsicht auf das Modul gemäß Figur 1,
Figur 4 ein Modul im Schnitt mit einem piezokeramischen Plättchen auf einem metallischen Kontaktplättchen als Wandlerelement im Ruhezustand,
Figur 5 das Modul von Figur 4 im aktiverten Zustand,
Figur 6 einen Kraftsensor mit verriegelbaren Betätigungselementen,
Figur 7 ein Relais mit einem beidseitig beschichteten piezoelektrischen Wandlerelement,
Figur 8 das Relais von Figur 7 in der anderen Schaltposition,
Figur 9 eine Relais mit einer elastischen Wandung als Betätigungselement,
Figur 10 eine Pumpe, deren Ventilkörper die Betätigungselemente bilden,
Figur 11 ein weiterer als Pumpe ausgebildeter elektromechanischer Wandler, bei dem das Betätigungselement als Kolben ausgebildet ist, und
Figur 12 ein weiterer als Motor ausgebildeter elektromechanischer Wandler.

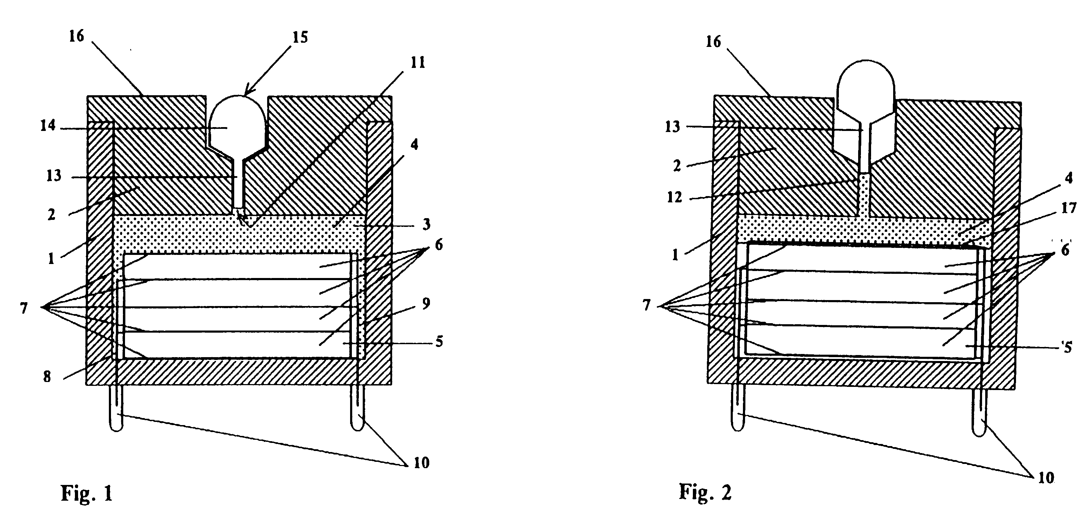

Das in Figur 1 und in Figur 2 im Schnitt dargestellte Modul besteht aus einem Gehäuse 1, welches oben mittels einer Abdeckung 2 abgeschlossen ist. Im Gehäuse 1 befindet sich ein Druckraum 3, in welchem sich eine Flüssigkeit 4 und ein piezoelektrisches Wandlerelement 5 befinden. Das Wandlerelement 5 besteht aus mehreren piezokeramischen Plättchen 6, die über metallische Flächen, die als dünnwandige Kontaktplättchen 7 ausgebildet sind, miteinander verbunden sind. Flexible elektrische Anschlüsse 8, 9 bilden die elektrische Verbindung zwischen den Kontaktplättchen 7 und den an der Unterseite abstehenden Kontaktsiften 10.

Der Druckraum 3 geht über eine Öffnung 11 über in einen in der Abdeckung 2 ausgebildeten Druckkanal 12, in den von oben ein Stempel 13 eines Betätigungselements 14 eingreift. Das Betätigungselemnt 14 bildet hier als Taststift ein auslenkbares und tastbares Element, welches soweit abgesenkt ist, daß seine Oberfläche 15 sich auf dem Niveau der Tastfläche 16 befindet. Eine Auslenkung des Betätigunselements 14 nach oben kann dadurch erfolgen, daß an den Kontaktstiften 10 eine elektrische Spannung angelegt wird, wodurch sich die piezokeramischen Plättchen 6 ausdehnen und somit eine Verdrängung der Flüssigkeit 4 im Druckraum 3 erzeugen. Die Flüssigkeit 4 strömt dadurch in den Druckkanal 12 ein, so daß dadurch der Stempel 13 und damit das gesamte Betätigungselement 14 angehoben wird und eine Position erreicht, wie diese in Figur 2 dargestellt ist.

Bei der Ausführung von Figur 2 ist weiterhin oberhalb des piezoelektrischen Wandlerelements 5 eine Membran 17 angeordnet, die somit die Flüssigkeit 4 vom Wandlerelement 5 trennt. Die Membran 17 ist so elastisch, daß diese sich an die Höhenänderung bzw. Volumenänderung des Wandlerelements 5 anpassen kann.

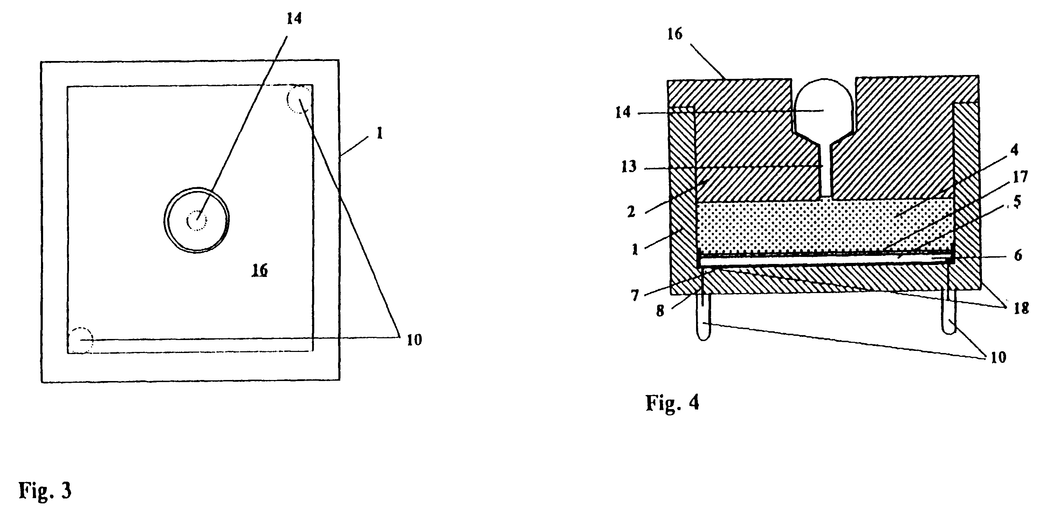

In der Draufsicht von Figur 3 ist die Position der Kontaktstifte 10 mit unterbrochenen Linien dargestellt, da sich diese an der nicht sichtbaren Unterseite des Moduls befinden.

Figur 4 zeigt eine Ausführung eines Moduls, dessen piezoelektrisches Wandlerelement 5 sich im Ruhezustand befindet und aus einem einzigen piezokeramischen Plättchen 6 und einem metallischen Kontaktplättchen 7 als Trägerelement besteht. An der Oberseite des Wandlerelements 5 ist dieses mit einer elastischen Membran 17 abgedeckt.

Über Kontaktierungsflächen 18 ausgebildet als federnde Kontakte, auf denen das Kontaktplättchen 7 aufliegt, wird die elektrische Verbindung zu den Kontaktstiften 10 hergestellt. Durch die federnde Kontakte wird die Kontaktierung der Wandlerelemente 5 auch bei deren Verformung sicher gewährleistet.

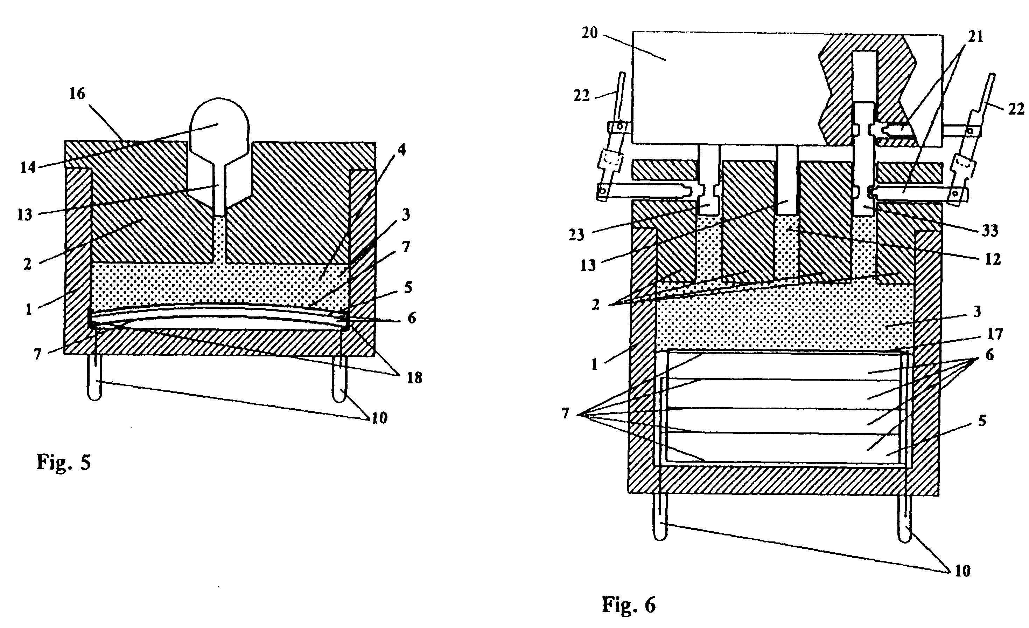

In Figur 5 ist der Modul von Figur 4 dargestellt, wobei sich jedoch hier das Wandlerelement 5 im aktivierten Zustand befindet, so daß das tastbare Betätigungselement 14 über die Tastfläche 16 nach oben absteht. Das Wandlerelement 5 ist eine schmale Scheibe, die je nach Querschnittsform des Druckraums 3 eine entsprechende Kontur hat. Bei zylindrischem Druckraum ist das Wandlerelement 5 als Kreisscheibe ausgebildet, während bei einer quadratischen Querschnittsform des Druckraums 3 das Wandlerelement 5 ebenfalls quadratische Form hat.

Figur 6 zeigt eine mögliche Anwendung des elektromechanischen Wandlers als Kraftsensor, dessen Geber 20 ebenfalls einen Stempel 13 besitzt, der in den Druckkanal 12 ragt. Wird der Geber 20 nach unten gedrückt, so bewirkt dies eine Erhöhung des Drucks im Druckraum 3, wodurch ein entsprechender Druck auf das Wandlerelement 5 übertragen wird. Das piezoelektrische Wandlerelement 5 erzeugt in Abhängigkeit vom anstehenden Druck eine Ladungsverschiebung, die in Form einer Spannung an den Kontaktstiften 10 gemessen werden kann. Zwischen dem Geber 20 können weitere Stempel 23, 33 mittels Riegel 21 und mittels Betätigungshebel 22 zugeschaltet oder abgeschaltet werden. Dadurch läßt sich die Empfindlichkeit des Sensors variieren. Zur Linearisierung der Kennlinie kann der Geber 20 mittels einer Zugfeder vorgespannt.

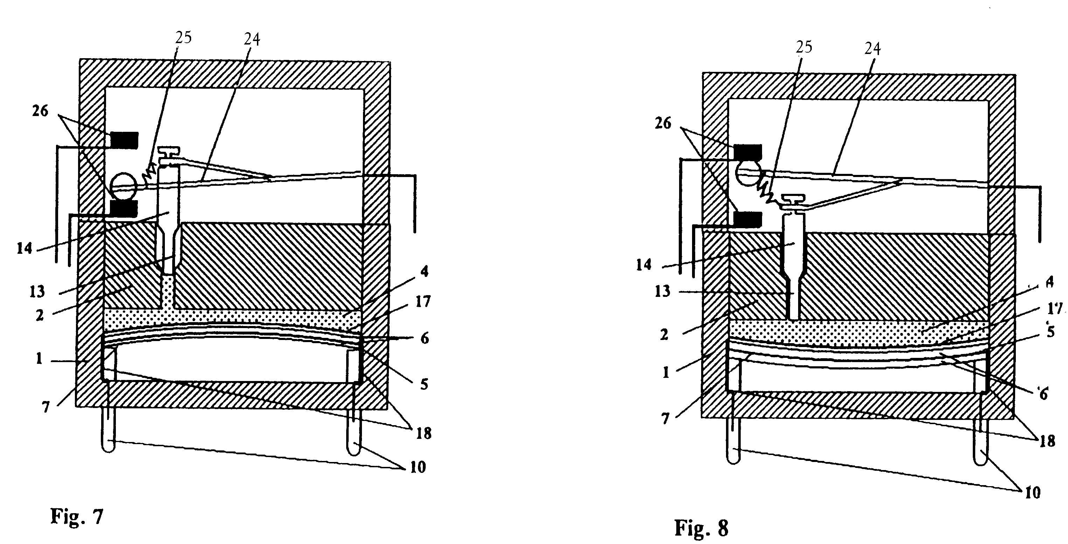

Figur 7 zeigt ein aktiviertes Relais mit einem piezoelektrischen Wandler 5, wie dieser bei Figur 5 verwendet ist. An den Kontaktstiften 10 ist eine Spannung angelegt, die eine Wölbung des Wandlers 5 nach oben erzeugt, so daß eine Kontaktfeder 24 in Verbindung mit einer Feder 25 vom Betätigungselement 14 entsprechend betätigt wird. Die Kontaktfeder 24 läßt sich zwischen Schaltkontakten 26 gemäß Figur 7 aus einer unteren Kontaktposition in eine obere Kontaktposition bringen, wie diese in Figur 8 dargestellt ist. In Figur 8 ist das piezoelektrische Wandlerelement entgegengesetzt zu der Darstellung gemäß Figur 7 gewölbt, wodurch eine entsprechende Kontaktumschaltung bewirkt wird.

Das piezoelektrische Wandlerelement 5 besteht bei den Ausführungen gemäß Figur 7 und Figur 8 aus einem metallischen Kontaktplättchen 7, bei dem zu beiden Seiten piezokeramische Plättchen 6 aufgebracht sind. Dadurch läßt sich das Wandlerelement 5 in beide Richtungen wölben, wodurch ein entsprechend großer Hub am Betätigungselement 14 bewirkt werden kann.

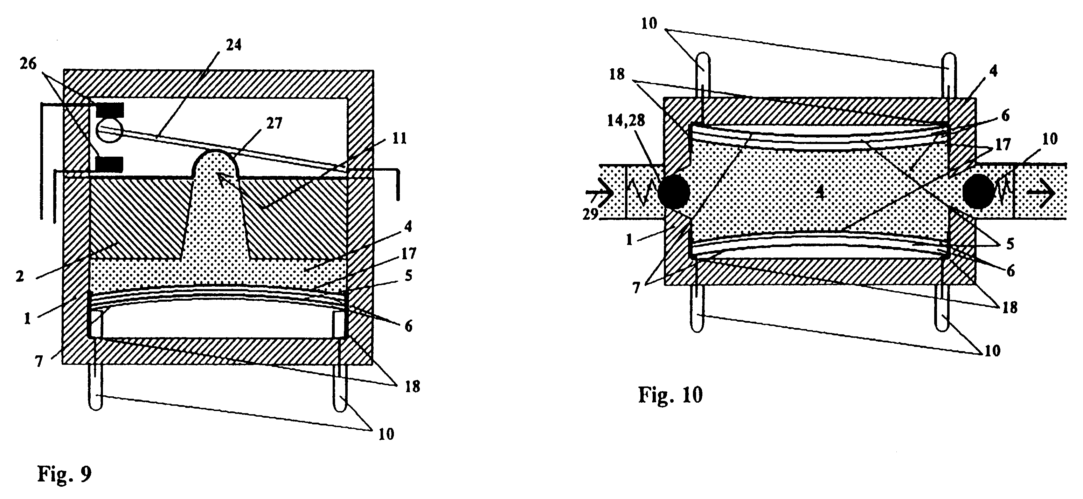

Bei dem in Figur 9 dargestellten Relais erfolgt die Betätigung der Kontaktfeder 24 über eine elastische Wandung 27, die hier das Betätigungselement bildet. Als piezoelektrisches Wandlerelement 5 entspricht denen der Ausführungsbeispiele gemäß Figur 7 und Figur 8.

In Figur 10 ist ein als Pumpe arbeitender elektromechanischer Wandler dargestellt, der zwei piezoelektrische Wandlerelemente 5 aufweist. Die Betätigungselemente 14 bilden hier Ventilkörper 28, die sich abwechselnd öffnen und schließen bei abwechselnder Aktivierung und Deaktivierung der beiden Wandlerelemente 5. Dadurch kann eine Flüssigkeit 4 in Pfeilrichtung 29 gepumpt werden.

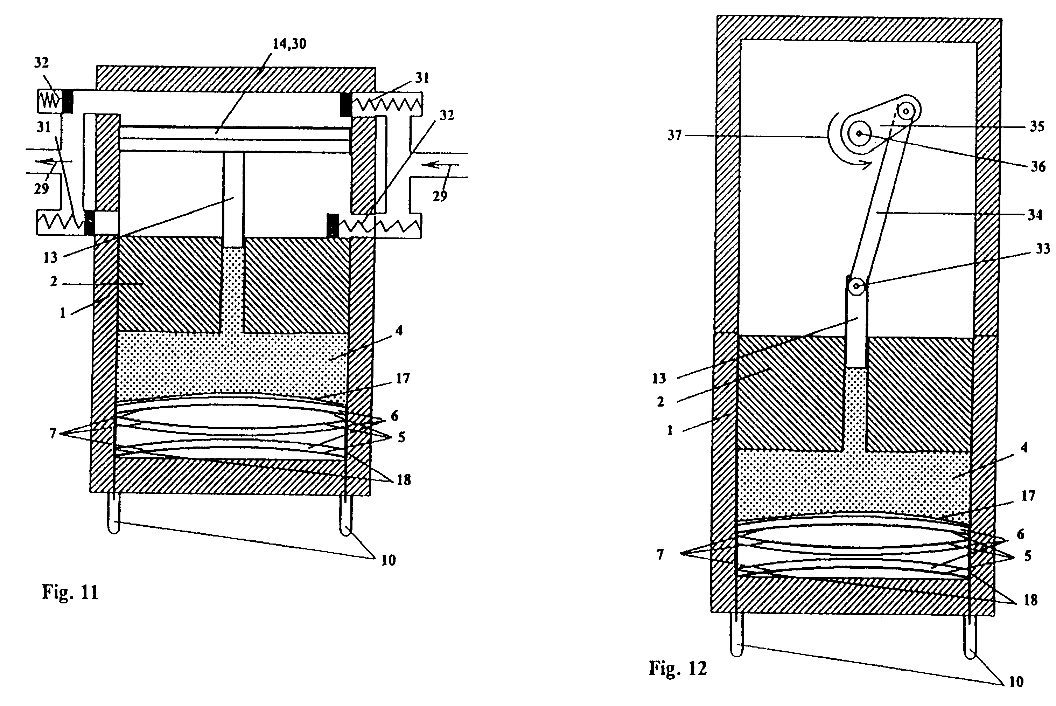

Eine weitere Anwendung ist in Figur 11 dargestellt, wobei hier das Betätigunselement 14 einen Kolben 30 bildet. Je nach Bewegungsrichtung des Kolbens 30 werden die Ventile 31, 32 geöffnet oder geschlossen, so daß in Pfeilrichtung 29 eine Flüssigkeit gepumpt werden kann. Das piezoelektrische Wandlerelement 5 besteht aus mehreren Einzelelementen, die jeweils entgegengesetzt ausgerichtet sind, d. h. daß bei Anlegen einer Steuerspannung an den Kontaktstiften 10 eine Addition der Wölbungen zu einer maximalen Volumenänderung führt.

Die Anwendung des piezoelektrischen Wandlers ist sehr vielseitig und deshalb nicht auf die dargestellten Anwendungsbeispiele beschränkt. Vorzugsweise wird jedoch die Verwendung zur taktilen Umsetzung von Information vorgeschlagen, da dieses mit einem auf besonders einfache Weise aufgebauten Modul realisiert werden kann.

Durch das flächige Aneinandersetzen solcher Moduln können abweichend von der klassischen Brailleform beliebig gerasterte taktile Flächen aufgebaut werden. Mit Hilfe unterschiedlicher Tastelementauslenkungen können hierbei zusätzliche Informationen z.B. Attribute wie Schriftfarben kodiert werden. So wird durch eine dreidimensionale Darstellung der taktile Zugang zu graphischer Information möglich.

In Figur 12 ist ein als Motor arbeitender elektromechanischer Wandler dargestellt, bei dem der Stempel 13 über ein Gelenk 33 mit einer Pleuelstange 34 verbunden ist, die durch einen Exzenter 35 bei geeigneter Ansteuerung der piezokeramischen Wandlerelemente die Drehachse 36 in Pfeilrichtung 37 in Drehung versetzt.

## Patentansprüche

1. Elektromechanischer Wandler mit wenigstens einem aus piezoelektrischen Plattchen (6) bestehenden Wandlerelement (5), welches eine Umwandlung eines elektrischen Signals in eine reversible Verformung des Wandlerelements (5) und/oder eine Umwandlung einer Kraft in ein elektrisches Signal ermöglicht, indem das Wandlerelement (5) in einem mit Flüssigkeit gefüllten Druckraum (3) einliegt der wenigstens in einen sich an die Öffnung (11) anschließenden Druckkanal mit kleinerer Querschnittsfläche übergeht, wobei das Wandlerelement (5) einerseits bei Anlegen einer Spannung an seinen elektrischen Kontaktflächen sich verformt und dadurch die Flüssigkeit (4) im Druckraum (3) durch eine Öffnung (11) verdrängt und damit ein Betätigungselement (14) bewegt sowie andererseits bei einem über die Flüssigkeit (4) auf das Wandlerelement (5) wirkenden Druck seine elektrischen Eigenschaften ändert, **dadurch gekennzeichnet**, daß mit Hilfe einer Kontaktierung der einzelnen Plättchen (6) mittels Federkontakten eine leitende Verbindung des Wandlerelements (5) auch im verformten Zustand sichergestellt ist.

2. Elektromechanischer Wandler nach Anspruch 1, **dadurch gekennzeichnet**, daß von außen ein dieselbe Querschnittsform wie der Druckkanal (12) aufweisender Stempel (13) ragt, der mit dem Betätigungselement (14) verbunden ist.

3. Elektromechanischer Wandler nach Anspruch 1, **dadurch gekennzeichnet**, daß die Öffnung (11) von einer elastich verformbaren Wandung (27) abgedeckt ist, die sich bei aktiviertem Wandlerelement (5) verformt.

4. Elektromechanischer Wandler nach einem der vorhergehenden Ansprüche, **dadurch gekennzeichnet**, daß das Betätigungselement (14) ein von außen tastbares Element ist und der Wandler ein Modul zur Darstellung oder zum Eingeben taktiler Informationen ist.

5. Elektromechanischer Wandler nach einem der vorhergehenden Ansprüche, **dadurch gekennzeichnet**, daß das Betätigungselement (14) in Form eines Tastelementes so angeordnet ist, daß eine äquidistante Anordnung mehrere dieser elektromechanischen Wandler zur Darstellung taktiler Informationen, insbesonderer von graphischer Information, ermöglicht wird.

6. Elektromechanischer Wandler nach einem der Ansprüche 1 bis 3, **dadurch gekennzeichnet**, daß der Wandler ein piezoelektrisches Relais ist, an dessen Kontaktfeder (24) ein Betätigungselement (14) angreift, das mittels Flüssigkeitsverdrängung bewegt wird.

7. Elektromechanischer Wandler nach einem der Ansprüche 2 oder 3, **dadurch gekennzeichnet**, daß der Wandler einen Drucksensor bildet dessen Geber (20) das Betätigungselement (14) bildet und mittels Federkraft in Richtung piezokeramisches Wandlerelement (5) vorgespannt ist, so daß die Aufnehmerkurve des Sensors bereits im Anfangsbereich linear verläuft und/oder sich mittels Riegel (21) die Stempel (23) zugeschaltet oder abgeschaltet werden können und somit die Empfindlichkeit des Sensors umstellbar ist.

8. Elektromechanischer Wandler nach einem der Ansprüche 1 bis 3, **dadurch gekennzeichnet**, daß das Betätigungselement (14) Teil einer Pumpe ist, wobei es als Kolben (30) oder als Ventilkörper (28) ausgebildet ist.

9. Elektromechanischer Wandler nach einem der Ansprüche 1 bis 3, **dadurch gekennzeichnet**, daß der Wandler als Motor ausgebildet ist, wobei der Stempel (13) eine Pleuelstange (34) betätigt, die mittels eines Exzenters (35) eine Kurbelwelle antreibt.

## Claims

1. An electromechanical transducer comprising at least one transducer element (5), which is comprised of a piezoceramic platelet (6), structured to convert an electrical signal applied to said at least one piezoelectric transducer element into a reversible deformation of said at least one piezoelectric transducer element (5) and/or convert a force applied to said at least one piezoelectric transducer element into an elecrical signal; a pressurized chamber (3) with at least one opening (11) to a pressure channel, said at least one piezoelectric transducer element (5) being located in said pressurized chamber (3); a fluid (4) filling said pressurized chamber; and when applying a voltage to said at least one piezoelectric transducer (5) to deform said at least one piezoelectric transducer element (5) so as to force a portion of said fluid (4) through said opening (11) causing a movement of the operating element (14) of said pressurized chamber (3) and also for detecting a change in an electrical property of said at least one piezoelectric transducer element (5) in response to a change in a pressure applied to said piezoelectric transducer element (5), characterized in the fact that springlike resilient conductive contact pieces are used in order to ensure the conductive connection of the transducer element (5) also in the deformed stage.

2. An electromechanical transducer according to claim 1,
characterized in
a piston (13) having a cross-sectional area corresponding to the cross-sectional area of the pressurized duct (12) whereas the piston (13) is connected to the operating element (14).

3. An electromechanical transducer according to claim 1,
characterized in
the opening (11) being covered by an elastically deformable wall (27) which deforms when the piezoelectrical transducer element (5) is activated.

4. An electromechanical transducer according to one of the claims above,
characterized in
the operating element (14) being a from the outside touchable element so that the transducer becomes a module to convert or detect tactile information.

5. An electromechanical transducer according to one of the claims above,
characterized in
the fact that the operating element (14) can be touched to form a module for translating tactile information so that several of said modules being spaced from each other in an equispaced array can be used to transform tactile information, especially of graphical information.

6. An electromechanical transducer according to claim 1 to claim 3,
characterized in
the fact that the transducer forms a piezoelectric relay where its resilient contacting element (24) is connected to the operating element (14) moved by the forced movement of a fluid.

7. An electromechanical transducer according to claim 2 or claim 3,
characterized in
the fact that the transducer forms a pressure sensor while its operating element (14) is a pressure transmitting element (20); and additional pistons (23, 33) arranged between said pressure transmitting element (20) and said at least one piezoelectric transducer element (5) to contact said fluid (4) in said pressurized chamber (3), said additional pistons being connectable and disconnectable mechanically with said pressure transmitting element (20) by connecting rods (21) and/or said spring (40) being structured so as to form a force detector having an adjustable sensitivity and/or a linear response.

8. An electromechanical transducer according to claim 1 to claim 3,
characterized in
the fact that the operating element (14) is part of a pump formed as a piston (30) or the housing of a valve (28).

9. An electromechanical transducer according to claim 1 to claim 3,
characterized in
the fact that the piston (13) is connected to a drive shaft (34) and
an eccentric element (35) rigidly attached to said drive shaft (34) and a connecting rod rigidly connecting said piston and said eccentric element (35) so as to form a motor.

## Revendications

1. Un transducteur électromécanique avec au moins un élément transducteur (5) qui se compose des lames piézoélectriques (6) permettant la transformation d' un signal électrique en une déformation réversible de l' élément transducteur (5) et/ou la transformation d' une force en un signal électrique du fait que l'élément transducteur (5) se trouve dans une chambre sous pression (3) remplie d' un liquide, qui aboutit au moins à un canal sous pression relié à l' ouverture (11) et ayant une aire de la section inférieure, du fait que , d' une part, l' élément transducteur (5) se déforme par l'application d' une tension à ses surfaces de contact électriques, ce qui déplace le liquide (4) dans la chambre sous pression (3) à travers une ouverture (11) et commande par cela un élément de commande (14), et du fait que ,d' autre part l' élément transducteur (5) change ses propriétés électriques si une pression, émanant du liquide (4), est exercée sur lui, ce transducteur électromécanique susdit se caractérise par le fait que l'établissement d' un contact élastique avec les différentes lames (6) moyennant des contacts élastiques assure la connexion conductrice avec l' élément transducteur (5), même déformé.

2. Un transducteur électromécanique qui se caractérise, conformément à la revendication 1, par le fait qu' un piston (13) relié à l' élément de commande (14) et dépassant à l' extérieur, a la même forme de coupe transversale par rapport à celle du canal de sortie (12).

3. Un transducteur électromécanique qui se caractérise, conformément à la revendication 1, par le fait que l' ouverture (11) est couverte d' une paroi élastiquement déformable (27) qui se déforme quand l' élément transducteur (5) est activé.

4. Un transducteur électromécanique qui se caractérise, conformément à une des revendications précédentes, par le fait que l' élément de commande (14) constitue un élément extérieurement palpable et que le transducteur constitue un module apte à représenter ou entrer des information tactiles.

5. Un transducteur électromécanique qui se caractérise, conformément à une des revendications précédentes, par le fait qu' un élément de commande (14) est aligné, sous forme d' un élément palpable, de sorte que l' alignement équidistant de plusieurs de ces transducteurs électromécaniques permet la représentation d'informations tactiles et plus spécialement celle d' informations graphiques.

6. Un transducteur électromécanique qui se caractérise, conformément à une des revendications 1 à 3, par le fait que le transducteur représente un relais piézoélectrique sur le ressort de contact (24) duquel agit un élément de commande (14) commandé par le déplacement d' un liquide.

7. Un transducteur électromécanique qui se caractérise, conformément à une des revendications 2 ou 3, par le fait que le transducteur constitue un détecteur de pression dont le transmetteur (20) est l' élément de commande (14) et qui est précontraint par le retour élastique en direction de l' élément transducteur piézocéramique (5), de sorte que la courbe du détecteur est déjà linéaire dans la phase initiale et/ou que les pistons (23) peuvent être connectés ou déconnectés par un verrou (21), ce qui permet de modifier la sensibilité du capteur.

8. Un transducteur électromécanique qui se caractérise, conformément à une des revendications 1 à 3, par le fait que l' élément de commande (14) fait partie d' une pompe, de sorte qu' il constitue un piston (30) ou un corps de soupape (28).

9. Un transducteur électromécanique qui se caractérise, conformément à une des revendications 1 à 3, par le fait que le transducteur constitue un moteur de sorte que le piston (13) actionne une bielle (34) qui commande un arbre à manivelle moyennant un excentrique (35).
